(19) Europäisches Patentamt | European Patent Office | Office européen des brevets

(11) **EP 3 825 203 B1**

(12) **EUROPEAN PATENT SPECIFICATION**

(45) Date of publication and mention
of the grant of the patent:
**03.01.2024 Bulletin 2024/01**

(21) Application number: **20207992.7**

(22) Date of filing: **17.11.2020**

(51) International Patent Classification (IPC):
**B61L 15/00** (2006.01)     **B61L 23/04** (2006.01)
**B61K 9/08** (2006.01)      **B60L 5/39** (2006.01)
**B61L 25/02** (2006.01)

(52) Cooperative Patent Classification (CPC):
**B61L 15/0081; B60L 5/39; B61K 9/08;
B61L 23/047;** B61L 25/026

(54) **SYSTEM, METHOD, AND RAILWAY VEHICLE FOR MONITORING A THIRD RAIL SYSTEM OF A RAILWAY LINE**

SYSTEM, VERFAHREN UND EISENBAHNFAHRZEUG ZUR ÜBERWACHUNG EINES DRITTE SCHIENE SYSTEMS EINER EISENBAHNSTRECKE

SYSTÈME, PROCÉDÉ ET VÉHICULE FERROVIAIRE POUR LA SURVEILLANCE D'UN SYSTÈME DE TROISIÈME RAIL D'UNE LIGNE FERROVIAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.11.2019 IN 201941047206**

(43) Date of publication of application:
**26.05.2021 Bulletin 2021/21**

(73) Proprietor: **ALSTOM Holdings
93400 Saint-Ouen-sur-Seine (FR)**

(72) Inventors:
• **GURUSAMY, Palanikumar
625001 MADURAI, Tamilnadu (IN)**
• **GANESAN, Muniandi
626001 VIRUDHUNAGAR, Tamilnadu (IN)**

(74) Representative: **Lavoix
2, place d'Estienne d'Orves
75441 Paris Cedex 09 (FR)**

(56) References cited:
**WO-A1-2013/162472    DE-A1-102017 006 141
US-A1- 2018 339 720**

• **WESTON P.F. ET AL: "Measuring the dynamic interaction between electric vehicle shoegear and the third rail", IET INTERNATIONAL CONFERENCE ON RAILWAY ENGINEERING 2008 (ICRE 2008), [Online] 28 March 2008 (2008-03-28), pages 14-17, XP055785945, DOI: 10.1049/ic:20080003 ISBN: 978-962-442-297-9 Retrieved from the Internet: URL:https://ieeexplore.ieee.org/stampPDF/g etPDF.jsp?tp=&arnumber=4730825&ref=aHR0c HM 6Ly9pZWVleHBsb3JlLmllZWUub3JnL2Fic3RyY WN0L 2RvY3VtZW50LzQ3MzA4MjUva2V5d29yZHM=> [retrieved on 2021-03-15]**

## Description

The present invention relates to a system, a method, and a railway vehicle for monitoring a third rail system of a railway line.

In the field of railway applications, it is well known the use of power lines which run along the extension of a railway line and are used for electrically feeding railway vehicles via an operative coupling with current collector equipment provided on-board of the vehicles to be powered.

A typical example of such applications, used for example in urban or underground railways, is represented by the so-called third rail system which comprises a power carrying conductor, i.e. the so called "third rail", which runs along a side of a track of the associated railway line and is associated with insulating supports.

The third rail carries out the feeding power and is operatively associated with current collector equipment, e.g. the so-called contact shoes, which are mounted on the railway vehicles; when a vehicle runs over the tracks of the railway line, contact shoes slide on a surface of the third rail and, through the surface contact, allow the transfer of feeding power to the transiting vehicle.

For such systems, and in particular for the third rail and the various supporting insulators, the risk of having defective parts is intrinsic and substantially unavoidable, for instance due to the working conditions under which they are used, e.g. climatic conditions which are usually variable and in some cases might be very harsh, or due to mechanical stresses, for example due to the friction exerted by the contact shoes over the third rail, or just due to the usual aging and mechanical wearing out of the various parts during lifetime service, et cetera.

As a consequence, a portion of the third rail may be for instance subject to unacceptable misalignments which would lead to lack of proper contact between the third rail and the contact shoes and in the end may cause arcing eventually leading to flashes or even fires.

Concerning the insulating supports, their insulating properties may deteriorate, for example due to aging or wet conditions, thus increasing the leakage current; an increased leakage current from the third rail to ground increases the temperature of the insulators ending in lead the so called "hot insulators".

A hot insulator can potentially damage connecting pads, fasteners, etc. and finally, loosened fasteners/connecting pads can lead to sag of the third rail due to gravity around the particular insulator.

The occurrence of such defective conditions is usually not instantaneous, but raises up gradually over a certain period of time, and it is clearly important that the onset of any defective part or condition is detected as timely and as precisely as possible in order to introduce corrective actions and prevent malfunctioning or failure that could result in long and unacceptable perturbations, or even disruptions, of the railway traffic.

One solution currently used for monitoring the integrity of third rail systems foresees the use of infrared cameras mounted on board of railway vehicles and of related thermal imaging systems; this solution is limited to the detection of possible hot spots and, even for such limited scope, it is not fully effective due to intrinsic technical limits, such as for example the relative positioning of the infrared cameras and the localization of the hot spots, which may lead to miss the identification thereof.

WO 2013/162472 A1 discloses a method for detecting faults in railway systems, wherein an alternating electrical signal is induced in a component of a rail vehicle which is electrically connected to a rail. The signal is inductively detected, and a signal processing operation is performed to identify defects based on the detected signal. Under normal circumstances, the detected signal is of a specific level. If there is any abnormality, for example a poor electrical contact due to partially damaged rail or a partial-short of motor, the impedance associated with the rail changes, which change will be reflected by the detected signal having a lower or higher amplitude than its normal level.

US 2018/339720 A1 discloses a railroad track inspection system which comprises multiple track scanning sensors, a data store, and a scan data processor which are attached to a common support structure for mounting the system to a railway vehicle in use. The scan data processor provides automatic analysis of the track scan data to detect track components within the scan data from a predetermined list of component types according to features identified in the scan data. An inertia sensor and common master clock are used to make corrections to the output of the track scanning sensors to accommodate dynamic forces in use.

DE 10 2017 006141 A1 discloses a monitoring system mounted on board of a vehicle for detecting defects in a power-supplying conductor rail. The system comprises a plurality of measuring devices for detecting the status of the rail. Further, in order to detect the position at which the measuring system is located, a position detection device is provided for detecting a marking, e.g. a QR code; in this way, the data recorded by means of the measuring devices can be evaluated and linked with the relevant sections of the rail. A processor or a separate server processes the data acquired by means of the measuring devices in order to identify possible failures of the rail.

Therefore, it is evident from the above that there is substantial room and need for further improvements in the monitoring of conditions of third rail systems of railways lines.

To this end, it is a main aim of the present invention to provide a solution for a more timely and precise detection of any defective part of a third rail system used for powering railways vehicles running along a railway line.

Within the scope of this aim, an object of the present invention is to provide a solution which allows monitoring the actual condition of a third rail system of a railway line, and in particular suitable to detect, substantially in real time, the onset of any defective part or condition along the path of the third rail system, either on the third rail, and/or on any supporting insulator, and/or even in the environment proximate to the entire path of the system, e.g. around the third rail and associated supporting insulators.

Yet a further object of the present invention is to provide a solution for monitoring the actual condition of a third rail system of a railway line which is highly reliable, relatively easy to realize and implement at competitive costs.

This aim, these objects and others which will become apparent hereinafter are achieved by a control system according to claim 1.

The above mentioned aim and objects of the present invention are also achieved by a method for monitoring a third rail system of a railway line according to claim 11.

Finally, the present invention provides also a railway vehicle, characterized in that it comprises, or it is adapted to interact with, a control system previously indicated, and in particular according to the relevant appended claims, and as per details given hereinafter.

Further characteristics and advantages will become apparent from the description of some preferred but not exclusive exemplary embodiments of a system, a method, and a related vehicle according to the invention, illustrated only by way of non-limitative examples with the accompanying drawings, wherein:

Figure 1 is a block diagram schematically illustrating a control system for monitoring a third rail system of a railway line according to an embodiment of the invention;

Figure 2 is a flow chart illustrating a method for monitoring a third rail system of a railway line according to an embodiment of the invention;

Figures 3-6 schematically show various possible positioning of sensors used in the system and method of figures 1 and 2, applied to corresponding possible configurations of third rail systems;

Figure 7 schematically shows a Hall effect sensor operatively associated to a portion of a third rail system.

It should be noted that in order to clearly and concisely describe the present disclosure, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning.

In particular, for electronic and/or software means, each of the above listed terms means and encompasses electronic circuits or parts thereof, as well as stored, embedded or running software codes and/or routines, algorithms, or complete programs, suitably designed for achieving the technical result and/or the functional performances for which such means are devised.

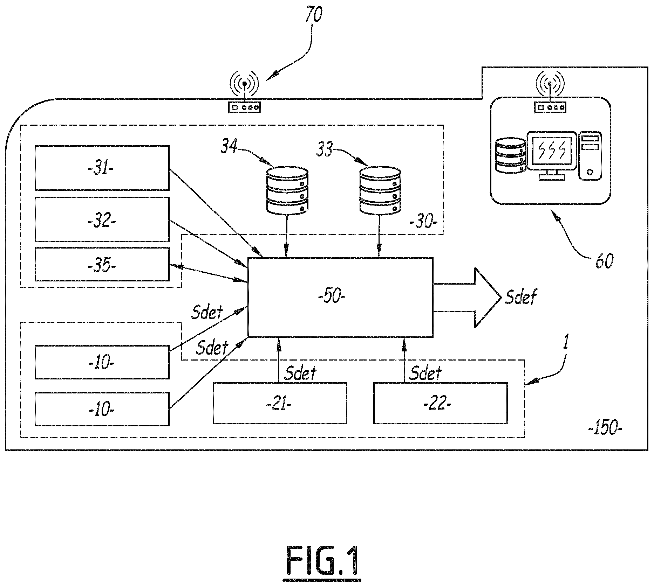

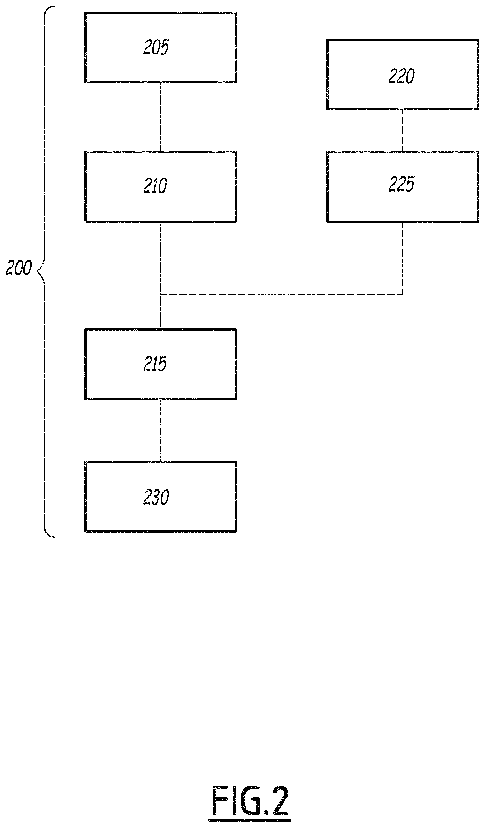

A system and a method for monitoring a third rail system of a railway line are schematically illustrated in figures 1 and 2, and therein indicated by the corresponding overall reference numbers 150 and 200, respectively.

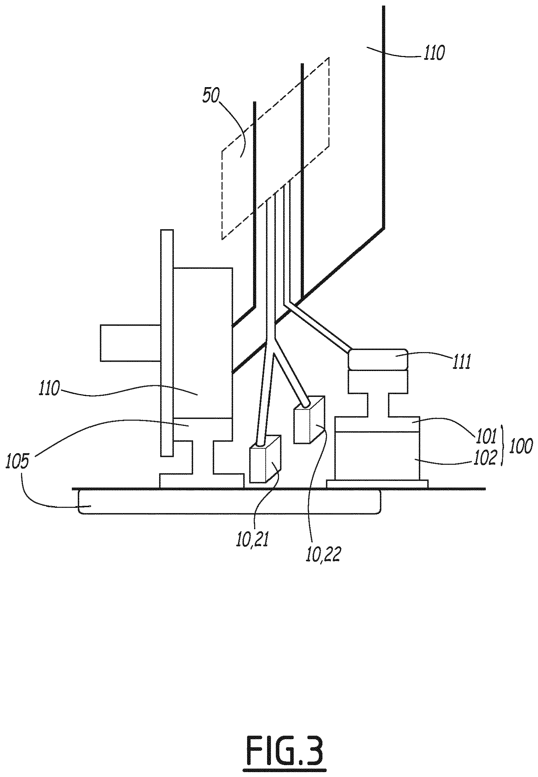

In particular, in figures 3-6 there are schematically illustrated some exemplary layouts of a third railway system, indicated by the overall reference number 100, which comprises a power carrying third rail 101 (hereinafter the "third rail 101 "), and one or more supporting insulators, only one of which is schematically represented in the relevant figures for ease of illustration, and therein indicated by the reference number 102.

As known, the third rail 101 runs along at least a portion of a railway line 105, schematically represented in figures 3-6 only by a representative track and a related sleeper for ease of illustration, and is suitable to supply a railway vehicle travelling along the railway line 105, schematically and partially represented by the reference number 110, via an associated current collector equipment, e.g. a contact shoe 111 mounted on board of the vehicle 110 itself.

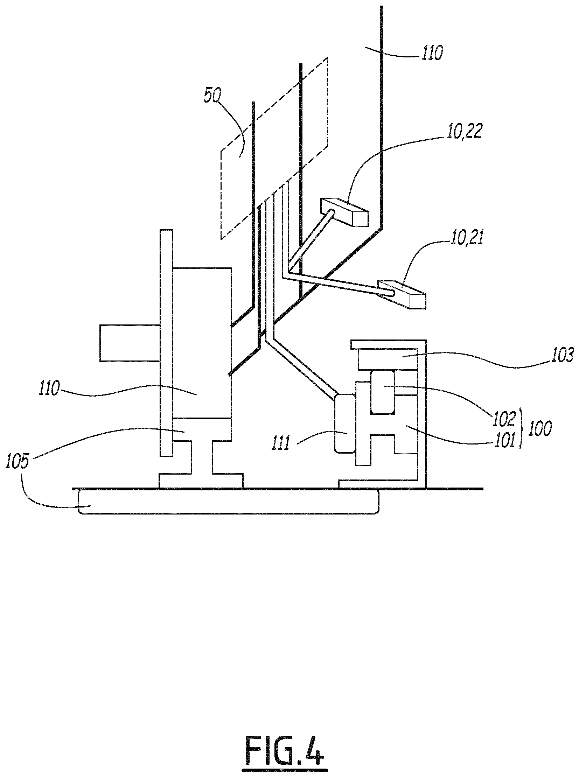

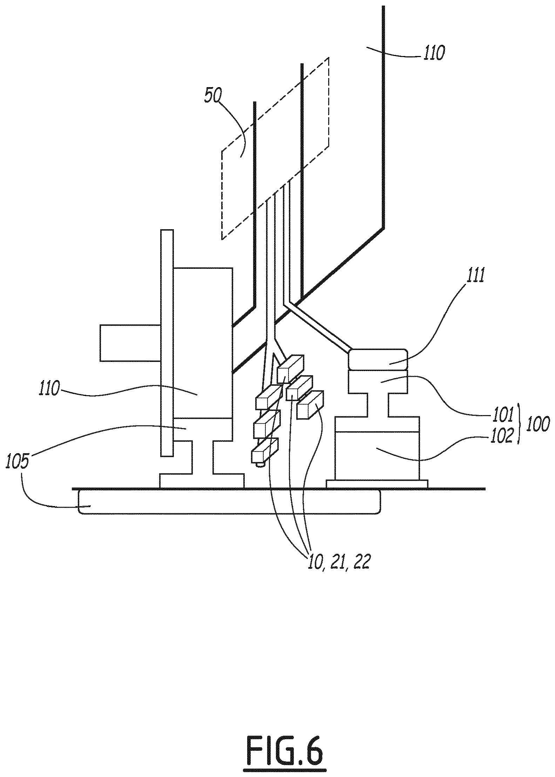

According to various and exemplary configurations, the supporting insulators 102 can be for example placed directly over the ground with the third rail 101 over a top surface thereof (see figures 3 and 6), or they can be also positioned at a distance over the ground (see figures 4-5), with or without the use of a protective cover 103 (see figures 3-5).

In a variant, the supporting insulators and the third rail may be essentially embedded in the ground.

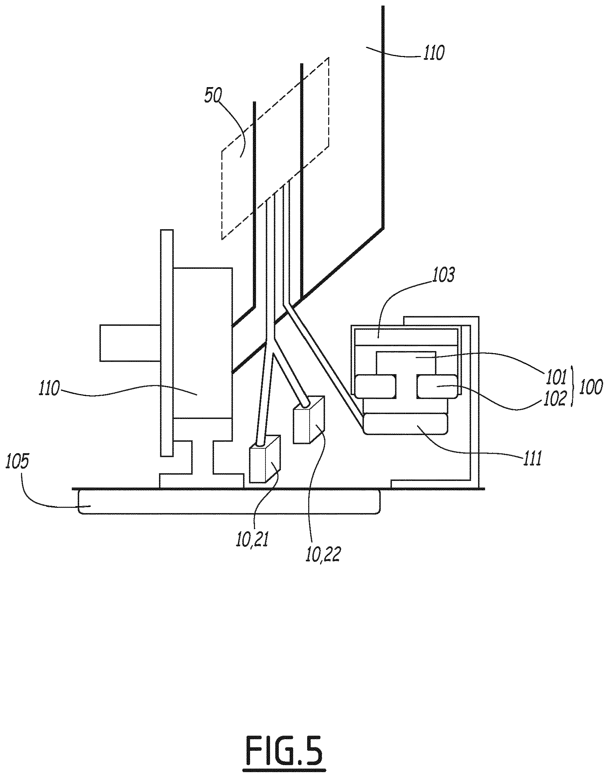

In turn, the contact shoe 111 can contact the third rail 101 on a top surface (figures 3 and 6), along a bottom surface (figure 5), or on a side (figure 4) thereof.

As those skilled in the art would easily appreciated, the term railway vehicle 110 herein used encompasses any type of railway vehicle which, when travelling along a railway line, is suitable to be electrically powered by a third rail system 100 associated to the railway line 105 itself; hence such term encompasses any suitable type of underground or surface railway vehicles, such as subway or surface trains, tramways, which can be composed by one or more carriages or vehicles, or the like.

As illustrated in figure 1, the control system 150 according to the invention comprises at least:

- a control and processing unit 50;
- one or more sensors 1 adapted to provide to the control and processing unit 50, preferably in real time and substantially continuously, signals (S$_{det}$) indicative of an actual detected condition of at least one part, e.g. the third rail 101 or any supporting insulator 102, of the third rail system 100 or of an environment at or around the at least one part 101, 102.

Preferably, the one or more sensors 1 are suitable to be mounted directly on board of a railway vehicle 110 travelling along the railway line 105 and the actual condition is therefore detected directly, and in real time, while the railway vehicle 110 is travelling along the railway line 105.

In the system 150, the control and processing unit 50 is configured for identifying, based on a comparison of the signals S$_{det}$ provided via the one or more sensors 1 with one or more predefined reference conditions, a potentially defective condition of the at least one part 101/102 or of the environment at or around the at least one part 101/102, and then generating a corresponding signal S$_{def}$ indicative of the actual identified defective condition once it has been identified.

Depending on the circumstances, for example on the type and/or severity of the defective condition identified, the corresponding signal S$_{def}$ generated by the unit 50 can be an informing alert, a signal triggering an alarm, for example for maintenance, or even a signal triggering an immediate interruption of power supply, and can be output for example towards a display positioned on-board of the railway vehicle 110 itself and/or to a display located a remote-control room.

The control and processing unit 50 can be of concentrated or distributed type, it can be preferably mounted completely on board of the railway vehicle 110, and it can be constituted by, or can comprise, any suitable processor-based device, e.g. a processor of a type commercially available, suitably programmed and provided to the extent necessary with circuitry, in order to perform the innovative functionalities devised for within the frame of the present invention.

According to a possible embodiment illustrated in figure 1, the control system 150 comprises also one or more devices 30, preferably a plurality of devices 30, which are devised to provide to the control and processing unit 50 at least data suitable to allow the unit 50 calculating and localizing the actual position of the railway vehicle 110 along the railway line 105.

In this way, the calculation of the actual position of the railway vehicle 110 allows to localize the identified potentially defective part 101/102 or environment at or around the at least one part 101/102, by simply linking the two different information, namely the detection of the defective condition and the position of the railway vehicle 110 along the line 105 at the time the defective condition is identified.

Preferably, at least some of the one or more devices 30, preferably all, are mounted on board of the railway vehicle 110.

According to the invention, the control system 150, the one or more sensors 1 comprise one or more magnetic field sensors 10 configured to sense values of a parameter indicative of an actual static magnetic field around the at least one part 101, 102 of the third rail system 100.

In particular, the one or more magnetic field sensors 10 comprise at least one Hall effect sensor, preferably a plurality of Hall effect sensors, e.g. at least two, as for example illustrated schematically in figures 3-5, or even more, as shown in the embodiment of figure 6 where an array of Hall effect sensors 10 is illustrated; such sensors 10 are properly positioned and calibrated in view of the type of part of the third rail system 100, including its surrounding environment, desired to be monitored, as well as of its configuration.

According to an embodiment, if the part to be monitored is represented by the power supplying conductor, namely the third rail 101, the control and processing unit 50 is configured for identifying, based on the comparison of the signals S$_{det}$ provided via the one or more magnetic field sensors 10 indicative of the actually detected static magnetic field around the third rail with a predetermined reference value for such static magnetic field, a displacement of the third rail 101 with respect to a reference and acceptable position corresponding to such predetermined reference value.

To this end, and according to a possible embodiment, the one or more magnetic field sensors 10 comprises at least a first magnetic field sensor 10 and a second magnetic field sensor 10, for instance two Hall effect sensors, which are configured both to sense first values and respectively second values indicative of the actual static magnetic field around the third rail power supplying conductor 101, and wherein the control and processing unit 50 is configured for identifying, based on the comparison of the signals S$_{det}$ provided via the first and second magnetic field sensors 10 with a first predetermined reference threshold, a displacement of the third rail 101 with respect to a predetermined reference position only when both the first and second sensed values violate the first predetermined threshold which is indicative of the reference and correct position of the third rail 101.

Likewise, according to the invention, the control and processing unit 50 is configured for identifying, a defective condition of a supporting insulator 102, based on the comparison of the signals S$_{det}$ provided via the one or more magnetic field sensors 10 indicative of the actually detected static magnetic field around at least one supporting insulator 101 with a predetermined reference value for such static magnetic field indicative of an acceptable or non-defective condition for the same supporting insulator 101.

Also in this case, according to a possible embodiment, the one or more magnetic field sensors 10 comprises at least a third magnetic field sensor 10 and a fourth magnetic field sensor 10, for instance two Hall effect sensors, which are configured both to sense first values and respectively second values indicative of the actual static magnetic field around the at least one supporting insulator 102, and wherein the control and processing unit 50 is configured for identifying, based on the comparison of the signals $S_{det}$ provided via the third and fourth magnetic field sensors 10 with a corresponding ("second") predetermined reference threshold, a defective condition of the supporting insulator 102 only when both the first and second sensed values violate the second predetermined threshold which is indicative of a non-defective or anyhow acceptable condition for the at least one supporting insulator 102.

In practice, based on two consecutive measurements for the same portion of the third rail 101 and for one supporting insulator 102, the unit 50 is able to detect a displacement of the third rail and/or the occurrence of damaged or hot insulator or even missing insulator and the use of at least two magnetic sensors 10 allows improving accuracy and reducing or even avoiding to consider false signals.

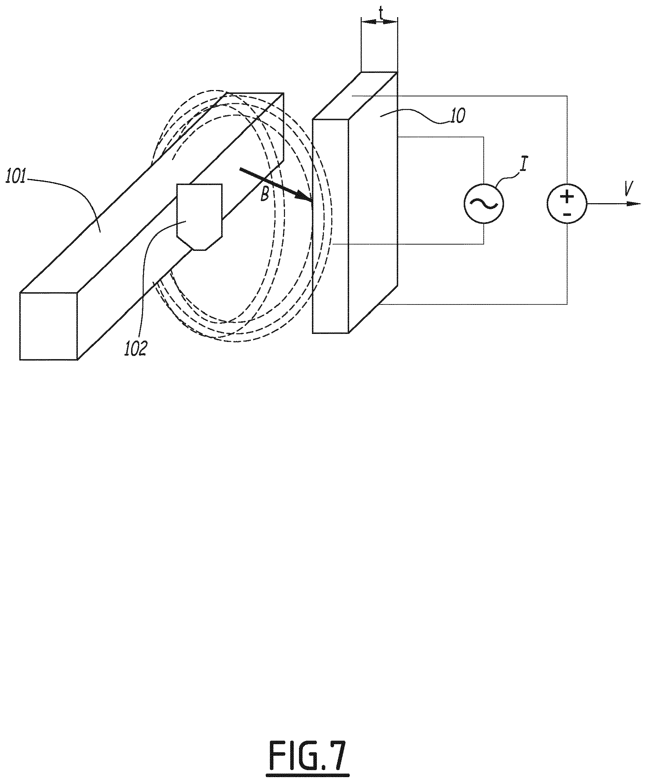

For instance, with reference to the schematic example depicted in figure 7, a static magnetic field is present around the third rail 101 due to the passage of high DC voltage, e.g. 750 V DC. As the constant voltage is transmitted through the third rail 101, the magnetic field strength can be considered substantially the same along the whole third rail 101. The magnetic field linked with the Hall effect sensor 10 is measured in terms of Hall voltage and is given by the following formula:

$$B = \frac{V_H t}{R_H I}$$

wherein "B" is the magnetic flux density linked with the Hall effect sensor 10, "t" is the thickness of the Hall effect sensor, "I" is the current supplied through the Hall effect sensor 10, "$R_H$" is the Hall Effect coefficient and "$V_H$" is the measured Hall voltage.

A DC voltage carried by the third rail 101 of 750 V with a current of 250 Amp would produce a magnetic field intensity of 1.67 Gauss at a distance of 30 centimeters. At this typical distance of 30cm, the Hall Effect sensor 10 produces an output voltage of 15-20 V, which can be used as a reference value; for instance, a change of 1 centimeter due to a displacement of the third rail 101, would cause a change of 0.1 Gauss, i.e. a change of 3-5 mV can be observed at the output. Such output signals provided by the Hall effect sensor(s) 10 can be used for monitoring displacements of the third rail.

In particular, if the third rail 101 has moved towards the railway vehicle 110, e.g. closer to the track of the railway line 105, an increase in the magnetic flux linkage can be experienced; conversely, if the third rail 101 has moved away from the railway vehicle 105, e.g. farther away from the track of the railway line 105, a decrease of the magnetic flux linkage can be seen.

Similar considerations can be applied with reference to the supporting insulators 102, whose presence reduces the flux linkage to a greater extent, for example of 0.5-0.75 Gauss with respect to the example above indicated, thereby producing a corresponding measurable change in the generated Hall voltage with respect to corresponding reference values.

If protective covers are used in the third rail system 100, the sensor(s) 10 can be suitably calibrated in order to take them into consideration.

According to a possible embodiment of the control system 150, the one or more sensors 1 comprises at least one smoke detector for detecting the presence of smoke in the environment proximate to at least one part of the third rail system 100, which are also preferably mounted on board of the railway vehicle 110.

In particular, in one possible embodiment, the at least one smoke detector comprises an ionization smoke detector 21, which is used for example to detect flaming fires along the third rail system environment.

Such ionization smoke detector 21 can be of any suitable type already commercially available on the market and, according to solutions well known in the art or readily available to those skilled in the art and therefore herein not described in details, it usually comprises two metallic plates acting as electrodes. In normal working condition, the air particles inside the ionization smoke detector 21 are converted into positive and negative ions which are absorbed by the electrodes thus producing a reference electricity signal $S_{det}$ in output. In case of smoke, the ions inside the sensor 21 bond with the air particles with smoke and eventually break the path of electricity. This change in electricity is an indication of smoke present in the environment along the path of third rail system 100.

According to a possible embodiment, the at least one smoke detector comprises a photoelectric smoke detector 22 used for example to detect shrouding fires along the third rail system environment.

Also the photoelectric smoke detector 22 can be of any suitable type already commercially available on the market and, according to solutions well known in the art or readily available to those skilled in the art and therefore herein not described in details, it comprises for instance a light source, e.g. a LED source, positioned inside a detecting chamber, and a photo or light sensor positioned at an entry of the chamber, for example perpendicular to the light source. Air particles entry into the chamber, inside which the LED source output the beam of light in a straight line. When any smoke present in the third rail system environment enters into the chamber during the vehicle movement, it disturbs the path of the light beams and scatters them towards the light sensor which detects the light and for example output a signal indicative of the presence of smoke in the proximate environment.

According to a possible embodiment, the above mentioned one or more devices 30 comprise at least one or more of: a multi-axis inertial sensor 31, preferably a multi-axis gyroscope 31, e.g. a 3D-gyroscope, which detects the 3-axis rotational movement of the railway vehicle 110 during the travel, thus allowing the unit 50 to compute for example the slopes, curves angles of the railway line 105; a speed sensor 32, e.g. an odometer and/or an accelerometer, which is devised to provide the unit 50 with data indicative of the actual speed/acceleration of the vehicle 110 thus allowing to compute a distance travelled from a reference position in a certain interval of time; one or more databases 33, 34 and at least one software (SW) module 35, in particular a nearest neighborhood Kalman filter 35.

In particular the one or more database 33, 34 stores data selected from the group comprising data related to the parts 101, 102, namely the third rail 101 and in particular the insulating support 102, and to a layout of the third rail systems (100) and of the railway line (105) itself.

For example, in the embodiment illustrated in figure 1, there are depicted two databases out of which, a first database 33, or third rail insulator database, which predominantly stores data of the third rail system infrastructure, such as one or more of, but not limited to, the following data: names(s) or identifier(s) of the railway station(s) along the railway line 105; interstation name(s) and length(s); number of supporting insulators 102 installed; per each supporting insulator 102, a related insulator identifier or ID; the insulator material; the insulator location, for instance the distance from a reference station; date of insulator insulation; age of insulator calculated based on the installation date; the frequency of service, e.g. the number of times the specific insulator has been exposed to sensors 1 since its installation in operation; the date of cleaning from contamination using for example vacuuming techniques; the periodicity of vacuuming required; the reference values, e.g. the output signals provided by the one or more sensors 1 measured or defined according to the normal and nominal operating conditions; upcoming gap, namely distance from an insulator, angle and length of the relevant gap.

As those skilled in the art would appreciate, some of the above indicated data can be inputted/updated manually, and some others can be calculated/updated periodically for example via the processing unit 50.

The second database 34 stores predominantly data correlating the material characteristics of the supporting insulators 102 with temperature values, and in particular it stores one or more of, but not limited to, the following data: names(s) or identifier(s) of the railway station(s) along the railway line 105; interstation name(s); identifier or ID of each insulator; material characteristics of each supporting insulator 102, such as the magnetic permeability and its variation with temperature; values of the signals provided by the sensors 1, e.g. Hall voltages generated by the Hall effect sensors 10 at various temperatures.

This database helps for example in identifying hot insulators and faulty/damaged insulators; indeed due to various reasons, for instance very high frictions between a third rail 102 and contact shoes, and/or faulty/wet/mud conditions, the temperature of supporting insulator may vary substantially, and as a consequence, also the magnetic permeability varies correspondingly.

Also in this case, some of the above indicated data can be inputted/updated manually in the database 34, and some others can be calculated/updated periodically for example via the processing unit 50.

Since it is possible to have clutters or false signals due to other iron or metallic pieces, stripes, et cetera, the at least one nearest neighborhood Kalman filter 35 is configured to calculate a predicted position for a forthcoming part 101/102 of the third rail system 100 and then to carry out a position validation check for confirming the correctness of the actual position calculated by the unit 50 for the same forthcoming part based 101/102.

In particular, by using for instance as inputs some actual values, such as the distance from a station, the speed/acceleration of the railway vehicle 105, a constant acceleration model, which can be used to propagate the various states from one instant to another instance, and data from third rail insulator database 33, the nearest neighborhood Kalman filter 35 calculates an expected location for a forthcoming part, e.g. a supporting insulator 102; then, it correlates the actual position calculated by the control and processing unit 50 for the same forthcoming part 101/102, and as derived from the actual position of the railway vehicle 110 along the railway line 105, with the predicted expected location.

For instance, the Kalman filter 35 when running the validation check draws a circular validation gate region based on predicted location as the center and accuracy or variance of sensing of Hall effect sensors 10 as the radius. If the location of the specific supporting insulator 102 (identified for example via measurements of the Hall effect sensor(s) plus measurement from the speed sensor 32) falls outside the validation gate, it is rejected as a false signal. If the measurement lies inside the validation gate and closest towards the center of the radius (in case of more than one measurement), it is treated as the valid insulator. In this way, the supporting insulator is identified without ambiguity for condition monitoring purposes.

According to a possible embodiment, the control system 150 comprises also a maintenance server, indicated in figure 1 by the reference number 60 which is suitable to receive at least the raw data provided via the one or more sensors 1 and/or elaborated by the unit 50, communicated via a communication device 70, e.g. a wireless transmitter.

In particular, the server 60 is configured for processing the data received along with the related time stamp, and elaborating a maintenance intervention or predictive maintenance schedule for the third rail system 100 and/or any part thereof. Such operations can be performed, for example by using intelligent algorithms, such as machine learning techniques.

Furthermore, based on offline data processing by the server 60 or of the control unit 50, the one or more databases 33, 34 can be updated and some data recalibrated, for example in case of larger deviations of values over a certain period of time with respect to nominal or reference values.

As above indicated, figure 2 illustrates schematically a method 200 for monitoring a third rail system 100 of a railway line 105, comprising at least the following steps:

- 205: providing signals $S_{det}$ indicative of an actual condition of at least one part 101, 102 of said third rail system 100 or of an environment at or around said at least one part 101, 102 detected via one or more sensors 1;
- 210: identifying, by means of a control and processing unit 50 and based on the signals $S_{det}$ provided via said one or more sensors 1, a potentially defective condition of said at least one part 101, 102 of or the environment at around said at least one part 101, 102;
- 215: generating, by said control and processing unit 50, a corresponding signal $S_{def}$ indicative of the actual defective condition once it has been identified.

According to the invention, the step 205 of providing signals $S_{det}$ comprises providing values of a parameter indicative of an actual static magnetic field around said at least one part 101, 102 of the third rail system 100 by means of one or more magnetic field sensors 10.

According to a possible embodiment, the at least one part 101, 102 of the third rail system 100 comprises a power supplying conductor 101, namely a third rail 101 used for supplying the vehicle 110 travelling along the railway line 105, and the step 210 of identifying comprises identifying a displacement of the power supplying conductor 101 with respect to a predetermined reference position based on the comparison of the signals $S_{det}$ provided via the one or more magnetic field sensors 10 indicative of the actual static magnetic field around the power supplying conductor 101 with a predetermined reference value indicative of said predetermined reference position for said static magnetic field.

In particular, the step 205 of providing signals $S_{det}$ comprises providing first and second values indicative of an actual static magnetic field around the power conductor 101 of the third rail system 100 by means of a first magnetic field sensor 10 and a respective second magnetic field sensor, e.g. by means of the above mentioned two Hall effects sensors. The step 210 of identifying comprises identifying a displacement of the power supplying conductor 101 with respect to a predetermined reference position only when both the first and second sensed values violate a first predetermined threshold indicative of said reference position for the power supplying conductor 101.

According to the invention, the at least one part 101, 102 of the third rail system 100 comprises at least one supporting insulator 102 and the step 210 of identifying comprises identifying a defective condition of the supporting insulator 102 based on the comparison of the signals $S_{det}$ provided via the one or more magnetic field sensors 10 indicative of the detected actual static magnetic field around the supporting insulator 102 with a predetermined reference value for the static magnetic field indicative of a non-defective condition of the supporting insulator 102.

In particular, the step 205 of providing signals $S_{det}$ comprises providing first and second values of a parameter indicative of an actual static magnetic field around said at least one supporting insulator 102 by means of a third magnetic field sensor 10 and a respective fourth magnetic field sensor, e.g. by means the above mentioned two Hall effects sensors, and the step 210 of identifying comprises identifying a defective condition of the supporting insulator 102 only when both the first and second sensed values violate a second predetermined threshold indicative of a non-defective condition for the supporting insulator 102.

According to an embodiment, the step 205 of providing signals $S_{det}$ comprises providing, by means of one or more smoke sensors 21, 22 signals indicative of the presence of smoke in the environment proximate to at least one part of the third rail system 100.

According to one embodiment, the method 200 according to the invention comprises a step 220 of calculating, the actual position of the railway vehicle 110 travelling along the railway line 105, based on data provided via one or more devices 30 suitable to be mounted on board of the railway vehicle 110, in order to timely locate the position of an identified defective condition along the railway line.

As those skilled in the art would readily appreciate, the step 220 can be carried out preferably continuously, or it can be executed periodically or only when there is found a potentially defective condition; it can be carried in parallel with or in whatever suitable order with respect to the other steps described, and in particular it can be carried out preferably before the step 215 of generating the signal $S_{det}$ indicative of an identified actual defective condition in order to associate to such defective condition also the localization thereof.

According to another embodiment, the method 200 comprises a further step 225 of carrying out, for example via the software module 35, namely a nearest neighborhood Kalman filter, a validation check for confirming the correctness of the localized position, at which for example a potentially defective condition has been identified, in the manner previously described.

According to yet another possible embodiment, the method 200 further comprises a step 230 of elaborating, by means of a maintenance server 60, a maintenance intervention or a predictive maintenance schedule for the third rail system 100 and/or any part thereof based on data provided by at least one of the one or more sensors 1 and the control and processing unit 50.

As those skilled in the art would readily appreciate, also the step 230 can be carried out continuously, or it can be executed periodically, in real time or off-line, and the server 60 can be mounted on board of the railway vehicle 100 or elsewhere.

Hence, it is evident from the foregoing description and appended claims that the control system 150, the method 200 and the related railway vehicle 110 according to the present invention, achieve the intended aim and objects, since they allow detecting, timely and precisely, the presence of a potentially defective part of any part of a third rail system used for powering railway vehicles.

In particular, depending on the applications and desired results, it is possible to combine two or more embodiments previously described thus monitoring at the same time different types of defective conditions related for example to displacements of the third rail 101, hot/faulty or even missing supporting insulators 102, presence of smokes and even fires at the environment associated with and proximate to the third rail system itself.

These results are achieved according to a solution very flexible that can be implemented by using any type of railway vehicle while such vehicle is performing its normal and regular duty service, thus avoiding the use of special vehicles designed specifically for maintenance. Indeed, any railway vehicle is suitable to be easily equipped with the components of the described control system 150, without needing the use of additional trackside devices.

In addition, via the use of the sensors 1, it is possible to operate in wet or dirty conditions, and by using the maintenance server 60, it is optionally possible to establish predictive maintenance plans at least for some parts of the monitored third rail system.

The system 150, method 200 and railway vehicle 110 thus conceived are susceptible of modifications and variations, all of which are within the scope of the inventive concept as defined by the appended claims; for example, some parts of the control system 150 may reside on the same electronic unit, or they can even be realized as subparts of a same component or circuit of an electronic unit, or they can be placed remotely from each other and in operative communication there between.

## Claims

1. A control system (150) for monitoring a third rail system (100) of a railway line (105), comprising at least:

   - a control and processing unit (50);

   - one or more sensors (1) which are adapted to provide to the control and processing unit (50) signals ($S_{det}$) indicative of an actual detected condition of at least one part (101, 102) of said third rail system (100) or of an environment at or around said at least one part (101, 102);

   wherein said control and processing unit (50) is configured for identifying, based on a comparison of the signals ($S_{det}$) provided via said one or more sensors (1) with one or more predefined reference conditions, a defective condition of said at least one part (101, 102) or of the environment at or around said at least one part (101, 102), and then generating a corresponding signal ($S_{det}$) indicative of the actual defective condition once identified, wherein said one or more sensors (1) comprise one or more magnetic field sensors (10) configured to sense values indicative of an actual magnetic field around said at least one part (101, 102) of the third rail system (100), wherein said at least one part (101, 102) of the third rail system (100) comprises at least one supporting insulator (102) and the control system (15) being **characterized in that** the control and processing unit (50) is configured for identifying, based on the comparison of the signals ($S_{det}$) provided via said one or more magnetic field sensors (10) indicative of the actual static magnetic field around the supporting insulator (102) with a predetermined reference value for said static magnetic field, a defective condition of the supporting insulator (102).

2. A control system (150) according to claim 1, wherein said at least one part (101, 102) of the third rail system (100) further comprises a power supplying conductor (101) and the control and processing unit (50) is further configured for identifying, based on the comparison of the signals ($S_{det}$) provided via said one or more magnetic field sensors (10) indicative of the actual static magnetic field around the power supplying conductor (101) with a predetermined reference value for said static magnetic field, a displacement of the power supplying conductor (101) with respect to a predetermined reference position.

3. A control system (150) according to claim 2, wherein said one or more magnetic field sensors (10) comprises at least a first magnetic field sensor (10) and a second magnetic field sensor (10) configured to sense first values and respectively second values indicative of the actual static magnetic field around the power supplying conductor (101), and wherein the control and processing unit (50) is configured for identifying, based on the comparison of the signals ($S_{det}$) provided via said first and second magnetic field sensors (10) with a first predetermined reference threshold, a displacement of the power supplying conductor (101) with respect to a predetermined reference position when both the first and second sensed values violate the first predetermined threshold indicative of said reference position for the power supplying conductor (101).

4. A control system (150) according to claim 1, wherein said one or more magnetic field sensors (10) comprises at least a third magnetic field sensor (10) and a fourth magnetic field sensor (10) configured to sense first values and respectively second values of a parameter indicative of the actual static magnetic field around the supporting insulator (102), and wherein the control and processing unit (50) is configured for identifying, based on the comparison of the signals ($S_{det}$) provided via said first and second magnetic field sensors (10) with a predetermined second reference threshold, a defective condition of the supporting insulator (102) when both the first and second sensed values violate said predetermined second threshold indicative of a non-defective condition for said supporting insulator (102).

5. A control system (150) according to any of claims 1 to 4, wherein said one or more sensors (1) comprises at least one smoke detector (21, 22) for detecting the presence of smoke in the environment proximate to said at least one part of the third rail system (100).

6. A control system (150) according to any of claims 1 to 5, wherein it further comprises one or more devices (30) suitable to be mounted on board of a railway vehicle (110) travelling along the railway line (105) and which are devised to provide the control and processing unit (50) with data suitable to allow calculating an actual position (P) of the railway vehicle (110) along the railway line (105).

7. A control system (150) according to claim 6, wherein said one or more devices (30) comprise at least one multi-axis inertial sensor (31), preferably at least a multi-axis gyroscope (31).

8. A control system (150) according to any of claims 6 to 7, wherein said one or more devices (30) comprise at least one of:

   - a speed sensor (32),
   - one or more databases (33, 34) storing data selected from the group comprising data related to parts (101, 102) of the third rail systems (101) and to a layout of the third rail system (100) and of the railway line (105),
   - a software module (35) which is configured to calculate a predicted position for a forthcoming part (101, 102) of the third rail system (100) and then to carry out a position validation check based on the correlation between the previously predicted position and the actual position calculated by the control and processing unit (50) for the same forthcoming part.

9. A control system (150) according to any one of the preceding claims, wherein it comprises a maintenance server (60) which is configured to elaborate, based on data received from at least one of the one or more sensors (1) and the control processing unit (50), a maintenance intervention or a predictive maintenance schedule for the third rail system (101) and/or any part thereof.

10. A railway vehicle (110), **characterized in that** it comprises a control system (150) according to any one of claims 1 to 9.

11. A method (200) for monitoring a third rail system (100) of a railway line (105), comprising at least the following steps:

   - (205): providing signals ($S_{det}$) indicative of an actual condition of at least one part (101, 102) of said third rail system (100) or of an environment at or around said at least one part (101, 102) detected via one or more sensors (1), wherein said one or more sensors (1) comprise one or more magnetic field sensors (10) configured to sense values indicative of an actual magnetic field around said at least one part (101, 102) of the third rail system (100);
   - (210): identifying, by means of a control and processing unit (50) and based on a comparison of the signals ($S_{det}$) provided via said one or more sensors (1) with one or more predefined reference conditions, a defective condition of said at least one part (101, 102) or of the environment at or around said at least one part (101, 102);
   - (215): generating, by said control and processing unit (50), a corresponding signal ($S_{def}$) indicative of the actual defective condition once identified; wherein said at least one part (101, 102) of the third rail system (100) comprises at least one supporting insulator (102), the method (200) being **characterized in that** said step (205) of providing signals ($S_{det}$) comprises providing values indicative of an actual static magnetic field around said at least one supporting insulator (102) by means of said one or more magnetic field sensors (10), and wherein said step (210) of identifying comprises identifying, based on the comparison of the signals ($S_{det}$) provided via said one or more magnetic field sensors (10) indicative of the actual static magnetic field around the supporting insulator (102) with a predetermined reference value for said static magnetic field, a defective condition of the supporting insulator (102).

**12.** A method (200) according to claim 11, wherein said at least one part (101, 102) of the third rail system (100) further comprises a power supplying conductor (101) and said step (210) of identifying further comprises identifying a displacement of the power supplying conductor (101) with respect to a predetermined reference position based on the comparison of the signals ($S_{det}$) provided via said one or more magnetic field sensors (10) indicative of the actual static magnetic field around the power supplying conductor (101) with a predetermined reference value for said static magnetic field.

**Patentansprüche**

**1.** Kontrollsystem (150) zum Überwachung eines Dritt-Schienensystems (100) einer Eisenbahnstrecke (105), mindestens umfassend:

- eine Steuer- und Verarbeitungseinheit (50);
- einen oder mehrere Sensoren (1), die angepasst sind, um der Steuer- und Verarbeitungseinheit (50) Signale ($S_{det}$) bereitzustellen, die indikativ für einen tatsächlich erfassten Zustand mindestens eines Teils (101, 102) des Dritt-Schienensystems (100) oder einer Umgebung an oder um den mindestens einen Teil (101, 102) ist;

wobei die Steuer- und Verarbeitungseinheit (50) konfiguriert ist, um basierend auf einem Vergleich der über den einen oder die mehreren Sensoren (1) bereitgestellten Signale ($S_{det}$) mit einer oder mehreren vordefinierten Referenzbedingungen einen fehlerhaften Zustand des mindestens einen Teils (101, 102) oder der Umgebung an oder um das mindestens eine Teil (101, 102) identifiziert, und dann ein entsprechendes Signal ($S_{det}$) zu erzeugen, das indikativ für den tatsächlichen fehlerhaften Zustand ist, sobald er identifiziert wurde, wobei der eine oder die mehreren Sensoren (1) einen oder mehrere Magnetfeldsensoren (10) umfassen, die konfiguriert sind, um Werte zu erfassen, die indikativ für ein tatsächliches Magnetfeld um den mindestens einen Teil (101, 102) des Dritt-Schienensystems (100) sind; wobei der mindestens eine Teil (101, 102) des Dritt-Schienensystems (100) mindestens einen tragenden Isolator (102) umfasst und das Steuersystem (15) **dadurch gekennzeichnet ist, dass** die Steuer- und Verarbeitungseinheit (50) konfiguriert ist, um basierend auf dem Vergleich der Signale ($S_{det}$), die über den einen oder die mehreren Magnetfeldsensoren (10) bereitgestellt werden und indikativ für das tatsächliche statische Magnetfeld um den Stützisolator (102) sind, mit einem vorbestimmten Referenzwert für das statische Magnetfeld, einen fehlerhaften Zustand des tragenden Isolators (102) zu identifizieren.

**2.** Steuersystem (150) nach Anspruch 1, wobei der mindestens eine Teil (101, 102) des Dritt-Schienensystems (100) ferner einen stromversorgenden Leiter (101) umfasst und die Steuer- und Verarbeitungseinheit (50) ferner konfiguriert ist, um basierend auf dem Vergleich der über den einen oder die mehreren Magnetfeldsensoren (10) bereitgestellten Signale ($S_{det}$), die indikativ für das tatsächliche statische Magnetfeld um den stromversorgenden Leiter (101) mit einem vorbestimmten Referenzwert für das statische Magnetfeld sind, eine Verlagerung des stromversorgenden Leiters (101) in Bezug auf eine vorbestimmte Referenzposition zu identifizieren.

**3.** Steuersystem (150) nach Anspruch 2, wobei der eine oder die mehreren Magnetfeldsensoren (10) mindestens einen ersten Magnetfeldsensor (10) und einen zweiten Magnetfeldsensor (10) umfassen, die konfiguriert sind, um erste Werte und jeweils zweite Werte zu erfassen, die indikativ für das tatsächliche statische Magnetfeld um den stromversorgenden Leiter (101) sind, und wobei die Steuer- und Verarbeitungseinheit (50) so konfiguriert ist, um basierend auf dem Vergleich der über den ersten und den zweiten Magnetfeldsensor (10) bereitgestellten Signale ($S_{det}$) mit einem ersten vorbestimmten Referenzschwellenwert eine Verlagerung des stromversorgenden Leiters (101) in Bezug auf eine vorbestimmte Referenzposition zu identifizieren, wenn sowohl der erste als auch der zweite erfasste Wert den ersten vorbestimmten Schwellenwert verletzen, der indikativ für die Referenzposition für den stromversorgenden Leiter (101) ist.

**4.** Steuersystem (150) nach Anspruch 1, wobei der eine oder die mehreren Magnetfeldsensoren (10) mindestens einen dritten Magnetfeldsensor (10) und einen vierten Magnetfeldsensor (10) umfassen, die konfiguriert sind, um erste Werte bzw. zweite Werte eines Parameters zu erfassen, der indikativ für das tatsächliche statische Magnetfeld um den tragenden Isolator (102) ist, und wobei die Steuer- und Verarbeitungseinheit (50) konfiguriert ist, um basierend auf dem Vergleich der über den ersten und den zweiten Magnetfeldsensor (10) bereitgestellten Signale ($S_{det}$) mit einem vorbestimmten zweiten Referenzschwellenwert einen defekten Zustand des tragenden Isolators (102) zu identifizieren, wenn sowohl der erste als auch der zweite erfasste Wert den vorbestimmten zweiten Schwellenwert verletzen, der indikativ für einen nichtdefekten Zustand für den tragenden Isolator (102) ist.

**5.** Steuersystem (150) nach einem der Ansprüche 1 bis 4, wobei der eine oder die mehreren Sensoren (1) mindestens einen Rauchdetektor (21, 22) zum Erfassen des Vorhandenseins von Rauch in der Umgebung in der Nähe des mindestens einen Teils des Dritt-Schienensystems (100) umfassen.

**6.** Steuersystem (150) nach einem der Ansprüche 1 bis 5, wobei es ferner eine oder mehrere Vorrichtungen (30) umfasst, die geeignet sind, um an Bord eines Eisenbahnfahrzeugs (110) montiert zu werden, das entlang der Eisenbahnstrecke (105) fährt, und die dazu vorgesehen sind, um der Steuer- und Verarbeitungseinheit (50) Daten bereitzustellen, die geeignet sind, um ein Berechnen einer tatsächlichen Position (P) des Eisenbahnfahrzeugs (110) entlang der Eisenbahnstrecke (105) zu ermöglichen.

**7.** Steuersystem (150) nach Anspruch 6, wobei die eine oder mehreren Vorrichtungen (30) mindestens einen mehrachsigen Trägheitssensor (31), vorzugsweise mindestens ein mehrachsiges Gyroskop (31), umfassen.

**8.** Steuersystem (150) nach einem der Ansprüche 6 bis 7, wobei die eine oder die mehreren Vorrichtungen (30) mindestens eines von Folgenden umfassen:

    - ein Geschwindigkeitssensor (32):
    - eine oder mehrere Datenbanken (33, 34), in denen Daten gespeichert sind, ausgewählt aus der Gruppe, umfassend Daten in Bezug auf Teile (101, 102) des Dritt-Schienensystems (101) und auf ein Layout des Dritt-Schienensystems (100) und der Eisenbahnstrecke (105),
    - ein Softwaremodul (35), das konfiguriert ist, um eine vorhergesagte Position für ein bevorstehendes Teil (101, 102) des Dritt-Schienensystems (100) zu berechnen und um dann eine Positionsvalidierungsprüfung basierend auf der Korrelation zwischen der vorhergesagten Position und der von der Steuer- und Verarbeitungseinheit (50) berechneten tatsächlichen Position für dasselbe bevorstehende Teil durchzuführen.

**9.** Steuersystem (150) nach einem der vorherigen Ansprüche, wobei es einen Wartungsserver (60) umfasst, der konfiguriert ist, um basierend auf Daten, die von mindestens einem der ein oder mehreren Sensoren (1) und der Steuer- und Verarbeitungseinheit (50) empfangen werden, einen Wartungseingriff oder einen prädiktiven Wartungsplan für das dritte Schienensystem (101) und/oder einen Teil davon zu erarbeiten.

**10.** Eisenbahnfahrzeug (110), **dadurch gekennzeichnet, dass** es ein Steuersystem (150) nach einem der Ansprüche 1 bis 9 umfasst.

**11.** Verfahren (200) zum Überwachen eines Dritt-Schienensystems (100) einer Eisenbahnstrecke (105), umfassend mindestens die folgenden Schritte:

    - (205): Bereitstellen von Signalen ($S_{det}$), die indikativ für einen tatsächlichen Zustand von mindestens einem Teil (101, 102) des Dritt-Schienensystems (100) oder einer Umgebung an oder um den mindestens einen Teil (101, 102) sind, der über einen oder mehrere Sensoren (1) erfasst wird, wobei der eine oder die mehreren Sensoren (1) einen oder mehrere Magnetfeldsensoren (10) umfassen, die konfiguriert sind, um Werte zu erfassen, die indikativ für ein tatsächliches Magnetfeld um den mindestens einen Teil (101, 102) des Dritt-Schienensystems (100) sind;
    - (210): Identifizieren, mittels einer Steuer- und Verarbeitungseinheit (50) und basierend auf einem Vergleich der Signale ($S_{det}$), die über den einen oder die mehreren Sensoren (1) bereitgestellt werden, mit einer oder mehreren vordefinierten Referenzbedingungen, eines fehlerhaften Zustands des mindestens einen Teils (101, 102) oder der Umgebung an oder um das mindestens eine Teil (101, 102);
    - (215): Erzeugen eines entsprechenden Signals ($S_{det}$) durch die Steuer- und Verarbeitungseinheit (50), das indikativ für den tatsächlichen fehlerhaften Zustand ist, sobald er identifiziert wurde; wobei der mindestens eine Teil (101, 102) des Dritt-Schienensystems (100) mindestens einen tragenden Isolator (102) umfasst, wobei das Verfahren (200) **dadurch gekennzeichnet ist, dass** der Schritt (205) eines Bereitstellens von Signalen ($S_{det}$) ein Bereitstellen von Werten umfasst, die indikativ für ein tatsächliches statisches Magnetfeld um den mindestens einen tragenden Isolator (102) mittels des einen oder der mehreren Magnetfeldsensoren (10) sind, und wobei der Schritt (210) eines Identifizierens das Identifizieren, basierend auf dem Vergleich der Signale ($S_{det}$), die über den einen oder die mehreren Magnetfeldsensoren (10) bereitgestellt werden, die indikativ für das tatsächliche statische Magnetfeld um den tragenden Isolator (102) mit einem vorbestimmten Referenzwert für das statische Magnetfeld sind, eines fehlerhaften Zustands des tragenden Isolators (102) umfasst.

**12.** Verfahren (200) nach Anspruch 11, wobei der mindestens eine Teil (101, 102) des Dritt-Schienensystems (100) ferner einen stromversorgenden Leiter (101) umfasst und der Schritt (210) eines Identifizierens ferner ein Identifizieren einer Verlagerung des stromversorgenden Leiters (101) in Bezug auf eine vorbestimmte Referenzposition basierend auf dem Vergleich der über den einen oder die mehreren Magnetfeldsensoren (10) bereitgestellten Signale ($S_{det}$), die indikativ für das tatsächliche statische Magnetfeld um den stromversorgenden Leiter (101) sind, mit einem vorbestimmten Referenzwert für das statische Magnetfeld, umfasst.

## Revendications

1. Système de commande (150) pour la surveillance d'un système de troisième rail (100) d'une ligne ferroviaire (105), comprenant au moins :

   - une unité de commande et de traitement (50) ;
   - un ou plusieurs capteurs (1) qui sont adaptés pour fournir à l'unité de commande et de traitement (50) des signaux ($S_{det}$) indiquant une condition réelle détectée d'au moins une partie (101, 102) dudit système de troisième rail (100) ou d'un environnement au niveau ou autour de ladite au moins une partie (101, 102) ;

   dans lequel ladite unité de commande et de traitement (50) est configurée pour identifier, sur la base d'une comparaison des signaux ($S_{det}$) fournis par lesdits un ou plusieurs capteurs (1) à une ou plusieurs conditions de référence prédéfinies, un état défectueux de ladite au moins une partie (101, 102) ou de l'environnement au niveau ou autour de ladite au moins une partie (101, 102), et pour générer ensuite un signal ($S_{def}$) correspondant indiquant l'état défectueux réel une fois identifié, dans lequel lesdits un ou plusieurs capteurs (1) comprennent un ou plusieurs capteurs de champ magnétique (10) configurés pour détecter des valeurs indiquant un champ magnétique réel autour de ladite au moins une partie (101, 102) du système de troisième rail (100), dans lequel ladite au moins une partie (101, 102) du système de troisième rail (100) comprend au moins un isolant de support (102) et le système de commande (15) étant **caractérisé en ce que** l'unité de commande et de traitement (50) est configurée pour identifier, sur la base de la comparaison des signaux ($S_{def}$) fournis par lesdits un ou plusieurs capteurs de champ magnétique (10) indiquant le champ magnétique statique réel autour de l'isolant de support (102) à une valeur de référence prédéterminée pour ledit champ magnétique statique, une condition défectueuse de l'isolant de support (102).

2. Système de commande (150) selon la revendication 1, dans lequel ladite au moins une partie (101, 102) du système de troisième rail (100) comprend en outre un conducteur d'alimentation (101) et l'unité de commande et de traitement (50) est en outre configurée pour identifier, sur la base de la comparaison des signaux ($S_{det}$) fournis par lesdits un ou plusieurs capteurs de champ magnétique (10) indiquant le champ magnétique statique réel autour du conducteur d'alimentation (101) à une valeur de référence prédéterminée pour ledit champ magnétique statique, un déplacement du conducteur d'alimentation (101) par rapport à une position de référence prédéterminée.

3. Système de commande (150) selon la revendication 2, dans lequel lesdits un ou plusieurs capteurs de champ magnétique (10) comprennent au moins un premier capteur de champ magnétique (10) et un deuxième capteur de champ magnétique (10) configurés pour détecter de premières valeurs et respectivement de secondes valeurs indicatives du champ magnétique statique réel autour du conducteur d'alimentation (101), et dans lequel l'unité de commande et de traitement (50) est configurée pour identifier, sur la base de la comparaison des signaux ($S_{det}$) fournis par lesdits premier et deuxième capteurs de champ magnétique (10) à un premier seuil de référence prédéterminé, un déplacement du conducteur d'alimentation (101) par rapport à une position de référence prédéterminée lorsque les premières et secondes valeurs détectées dépassent le premier seuil prédéterminé indicatif de ladite position de référence pour le conducteur d'alimentation (101).

4. Système de commande (150) selon la revendication 1, dans lequel lesdits un ou plusieurs capteurs de champ magnétique (10) comprennent au moins un troisième capteur de champ magnétique (10) et un quatrième capteur de champ magnétique (10) configurés pour détecter de premières valeurs et respectivement de secondes valeurs d'un paramètre indiquant le champ magnétique statique réel autour de l'isolant de support (102), et dans lequel l'unité de commande et de traitement (50) est configurée pour identifier, sur la base de la comparaison des signaux ($S_{det}$) fournis par lesdits premier et deuxième capteurs de champ magnétique (10) à un second seuil de référence prédéterminé, un état défectueux de l'isolant de support (102) lorsque les premières et secondes valeurs détectées dépassent ledit second seuil prédéterminé indiquant un état non défectueux pour ledit isolant de support (102).

5. Système de commande (150) selon l'une des revendications 1 à 4, dans lequel lesdits un ou plusieurs capteurs (1) comprennent au moins un détecteur de fumée (21, 22) pour détecter la présence de fumée dans l'environnement proche de ladite au moins une partie du système de troisième rail (100).

6. Système de commande (150) selon l'une quelconque des revendications 1 à 5, comprenant en outre un ou plusieurs dispositifs (30) pouvant être montés à bord d'un véhicule ferroviaire (110) se déplaçant le long de la ligne ferroviaire (105) et conçus pour fournir à l'unité de commande et de traitement (50) des données permettant de calculer une position réelle (P) du véhicule ferroviaire (110) le long de la ligne ferroviaire (105).

**7.** Système de commande (150) selon la revendication 6, dans lequel lesdits un ou plusieurs dispositifs (30) comprennent au moins un capteur inertiel multiaxial (31), de préférence au moins un gyroscope multiaxial (31).

**8.** Système de commande (150) selon l'une quelconque des revendications 6 et 7, dans lequel lesdits un ou plusieurs dispositifs (30) comprennent au moins l'un parmi :

- un capteur de vitesse (32),
- une ou plusieurs bases de données (33, 34) stockant des données sélectionnées dans le groupe comprenant des données relatives aux parties (101, 102) des systèmes de troisième rail (101) et à une disposition du système de troisième rail (100) et de la ligne ferroviaire (105),
- un module logiciel (35) configuré pour calculer une position prédite pour une partie à venir (101, 102) du système de troisième rail (100), puis pour effectuer un contrôle de validation de la position sur la base de la corrélation entre la position prédite précédemment et la position réelle calculée par l'unité de commande et de traitement (50) pour la même partie à venir.

**9.** Système de commande (150) selon l'une quelconque des revendications précédentes, comprenant un serveur de maintenance (60) configuré pour élaborer, sur la base des données reçues d'au moins un des un ou plusieurs capteurs (1) et de l'unité de commande et de traitement (50), une intervention de maintenance ou un programme de maintenance prédictive pour le système de troisième rail (101) et/ou une quelconque partie de celui-ci.

**10.** Véhicule ferroviaire (110) **caractérisé en ce qu'**il comprend un système de commande (150) selon l'une quelconque des revendications 1 à 9.

**11.** Procédé (200) de surveillance d'un système de troisième rail (100) d'une ligne ferroviaire (105), comprenant au moins les étapes suivantes :

- (205) : fourniture de signaux ($S_{det}$) indiquant un état réel d'au moins une partie (101, 102) dudit système de troisième rail (100) ou d'un environnement au niveau ou autour de ladite au moins une partie (101, 102) détecté par un ou plusieurs capteurs (1), dans lequel lesdits un ou plusieurs capteurs (1) comprennent un ou plusieurs capteurs de champ magnétique (10) configurés pour détecter des valeurs indiquant un champ magnétique réel autour de ladite au moins une partie (101, 102) du système de troisième rail (100) ;
- (210) : identification, au moyen d'une unité de commande et de traitement (50) et sur la base d'une comparaison des signaux ($S_{det}$) fournis par lesdits un ou plusieurs capteurs (1) à un ou plusieurs états de référence prédéfinis, d'un état défectueux de ladite au moins une partie (101, 102) ou de l'environnement au niveau ou autour de ladite au moins une partie (101, 102) ;
- (215) : génération, par ladite unité de commande et de traitement (50), d'un signal ($S_{def}$) correspondant indiquant l'état défectueux réel une fois identifié ; dans lequel ladite au moins une partie (101, 102) du système de troisième rail (100) comprend au moins un isolant de support (102), le procédé (200) étant **caractérisé en ce que** ladite étape (205) de fourniture de signaux ($S_{det}$) comprend la fourniture de valeurs indiquant un champ magnétique statique réel autour dudit au moins un isolant de support (102) à l'aide desdits un ou plusieurs capteurs de champ magnétique (10), et dans lequel ladite étape (210) d'identification comprend l'identification, sur la base de la comparaison des signaux ($S_{det}$) fournis par lesdits un ou plusieurs capteurs de champ magnétique (10) indiquant le champ magnétique statique réel autour de l'isolant de support (102) à une valeur de référence prédéterminée pour ledit champ magnétique statique, d'un état défectueux de l'isolant de support (102).

**12.** Procédé (200) selon la revendication 11, dans lequel ladite au moins une partie (101, 102) du système de troisième rail (100) comprend en outre un conducteur d'alimentation (101) et ladite étape (210) d'identification comprend en outre l'identification d'un déplacement du conducteur d'alimentation (101) par rapport à une position de référence prédéterminée sur la base de la comparaison des signaux ($S_{det}$) fournis par lesdits un ou plusieurs capteurs de champ magnétique (10) indiquant le champ magnétique statique réel autour du conducteur d'alimentation (101) à une valeur de référence prédéterminée pour ledit champ magnétique statique.

FIG.1

<u>FIG.2</u>

**FIG.3**

## FIG.4

FIG.5

FIG.6

# FIG.7

**EP 3 825 203 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013162472 A1
- US 2018339720 A1
- DE 102017006141 A1